# EUROPEAN PATENT SPECIFICATION

(11) **EP 2 006 197 B1**
(45) Date of publication and mention of the grant of the patent: **04.04.2012**
(21) Application number: 08007946.0
(22) Date of filing: 24.04.2008
(51) Int. Cl.: B62J 23/00, B62J 33/00, B62K 21/26

(54) **Element for the thermal protection of users of vehicles having handlebar**
Element für den Wärmeschutz von Benutzern eines Fahrzeugs mit Lenker
Élément pour la protection thermique d'utilisateurs de véhicules dotés d'un guidon

(30) Priority: 07.05.2007 IT MI20070908
(43) Date of publication of application: 24.12.2008
(73) Proprietor: Tucano Urbano S.r.l., 20121 Milan (IT)
(72) Inventor: Colombo, Francesco, 20123 Milano (IT); Lurani, Nicolò, 20123 Milano (IT); Bertolotti, Claudia, 24044 Dalmine (BG) (IT)
(74) Representative: Marietti, Andrea

(56) References cited:
- CN-Y- 2 815 837
- FR-A- 1 115 529
- GB-A- 2 113 163
- GB-A- 191 208 613
- JP-A- 2006 248 300
- JP-U- 3 015 797

## Description

The present invention relates to a thermal protection element for users of vehicles provided with a handlebar, and in particular relates to a covering element to protect the hands of drivers of these vehicles.

The use of two-wheeled vehicles to replace motor cars or means of public transport is becoming increasingly common for daily travel, above all in urban areas. In fact, in view of their small dimensions and agility, the use of two-wheeled vehicles, in particular low-powered motorcycles and scooters, provides an easy solution to urban traffic and solves the problem of the lack of parking spaces common to all urban areas.

Although prevalent in summer, their use is also common during the winter months, in spite of the adverse weather conditions and severe temperatures that characterize these months.

In order to maintain comfortable thermal conditions and to offer the users of vehicles provided with a handlebar effective protection from adverse weather, various waterproof and thermally insulating devices suitable to offer local protection to portions of the human body have been produced. In particular, to protect the hands gloves are commonly used; these may be lined with heat insulating material and provided with protections suitable for use with a motorcycle. However, the use of gloves makes it difficult to operate the vehicle controls and consequently causes a reduction in driving sensitivity.

In order to ensure efficient thermal protection of the upper limbs, which must be maintained fully functional to allow safe driving, and at the same time allow easy operation of the motorcycle/scooter controls, flexible protective elements have been produced in the form of a sheath, or cover, each of which can be constrained to an end of the handlebar, i.e. to a handgrip of the vehicle, and intended to house the hands and part of the forearms of the driver.

Conventional protective elements are sheaths, as a rule composed of a tubular cover made of waterproof material, which has a side opening into which an end of the handlebar is inserted, and a mouth, with axis transverse in relation to the handlebar, in which an upper limb of the driver can be partially housed.

The shape and dimensions of the cover are such as to allow covering of the handgrip and of the control lever (of the brake or clutch) present at each end of the handlebar, and of the hand and part of the upper limb of the driver, at the same time allowing simple operation of the handgrip and/or of the control lever by the driver.

The side opening, when the handlebar is inserted into the protective element, can be closed over the handlebar in order to prevent any rain, wind, snow, etc. from reaching the limb of the motorcyclist during driving. Moreover, the side opening can have an elastic bellows, which can also be closed over the handlebar of the vehicle, contributing toward improving the seal of the connection between protective element and vehicle and, at the same time, providing users with greater protection against adverse weather.

The Japanese patent application JP 2006-248300 describes a conventional sheath with all the features of the preamble of claim 1, which can be fitted to the handlebar of a motorcycle or scooter, to a handgrip, for thermal protection of the hands of the driver. The sheath is made of a waterproof material, such as synthetic resin, plastic or rubber, and is shaped so as to surround the handgrip of the vehicle and relative control lever. One side of the sheath is provided with an opening into which a handgrip of the handlebar of the relative vehicle can be inserted. The sheath can be constrained to the handlebar by means of clip fastening devices. In practice, the side opening of the sheath is fitted over the handlebar fairing and the clips allow the edges of the opening to be tightened around this fairing.

Prior art protective elements, of the type described above, provide effective protection against adverse weather conditions and maintain the upper limbs of the motorcyclists in satisfactory thermal conditions even during the winter months. However, during travel the flow of air that strikes the vehicle can produce vibrations that tend to loosen and/or move the fastening point of the sheath, causing a sudden decrease in protection against bad weather and reducing ergonomic use of the driving controls of the vehicle located on the ends of the handlebar.

Moreover, the action of the air flow during travel of the vehicle can also cause the sheath to rotate toward the driver, around the fastening point to the handlebar, in a plane substantially parallel to the plane defined by the road surface. This rotation, above all when the vehicle is travelling at high speed, can cause the sheath to interfere with the end of the control levers (brake and clutch), which can thus be accidentally operated by the sheath and consequently form a danger, at times even grave, for users of the vehicle.

The Italian patent application IT MI 1999A001593 describes a sheath having a side that can be constrained to the handlebar of the vehicle by means of a bellows portion which can be closed over this handlebar, for example with Velcro. The connection is made stable by a rigid arm, preferably made of metal, that laterally connects the sheath to the handlebar frame, or to the rear view mirror or to the handlebar fairing, preventing unwanted movements of the sheath in all conditions of use. A similar solution is described in the subsequent Chinese patent application CN 2815837Y.

A drawback of conventional solutions, in which an arm supports the sheath and guarantees its correct positioning, is given by the fact that this arm cannot be installed on all motorcycles or scooters in circulation, as there are no standard dimensions for the handlebars of existing vehicles. In other words, the supporting arm cannot have a shape suitable for installation on all vehicles in circulation, and this obliges the manufacturer of these sheaths to diversify the production according to the models of motorcycle or scooter to which the sheaths are to be fitted, with evident negative repercussions on the production costs.

An object of the present invention is to produce a thermal protection element for users of vehicles provided with a handlebar that overcomes, in a simple manner, the drawbacks of conventional solutions, while at the same time being inexpensive, easy to install and reliable.

Another object of the present invention is to provide a thermal protection element for users of vehicles provided with a handlebar, in particular a sheath to protect the hands of the driver, which offers a valid alternative to the solutions provided with a supporting arm, being easy to install on all, or almost all, motorcycles or scooters in circulation, without requiring specific modifications for adaptation to each model of vehicle.

These and other objects are achieved by the present invention which relates to a thermal protection element for the upper limbs of users of vehicles provided with a handlebar, as claimed in claim 1.

In general, the protective element comprises a cover (or sheath) provided with at least a first side opening for insertion of an end of the handlebar and with a rear opening to allow at least partial housing of an upper limb of the user inside the cover. It is also provided with at least a retaining element, distinct from the cover and positioned inside said cover, which can be fastened integrally to the handlebar or to the relative handgrip to prevent the handlebar from slipping through the relative side opening of the cover and to support at least a portion of this cover.

Advantageously, the retaining element prevents the cover from becoming accidentally separated from the relative handlebar, or from being easily stolen when the relative vehicle is parked. Moreover, the retaining element also acts as a support, as it supports at least a portion of the cover at the side opening thereof. In other words, the retaining element prevent the cover from collapsing, or in any case abutting against the handlebar or relative handgrip, obstructing the movements of the driver of the vehicle or the movements of the control levers.

Preferably, the retaining element has a substantially toroidal shape, so as to be fitted over the metal frame of the handlebar or over the surface of the handgrip present on this handlebar. The outer diameter of the retaining element is larger than the diameter of the side opening of the cover. This geometrical characteristic prevents the retaining element from slipping through the side opening of the cover, i.e. prevents removal of the cover from the handlebar. The circular edge of the retaining element does not interfere with the cover even when this retaining element rotates together with the handgrip of the vehicle accelerator. In other words, the return travel of the handgrip of the accelerator is not obstructed by the presence of the retaining element and of the cover, as is required for safe driving.

According to the preferred embodiment of the present invention, the retaining element is a ring composed of two halves that can be clamped to the metal frame of the handlebar or to the relative handgrip made of plastic/rubber material, which remains interposed between the two halves.

The two halves of the retaining element can be made of a plastic material, such as polypropylene, or of metal. The outer edge is preferably bevelled to prevent interference with the inner surface of the cover, or sheath. These halves can be screwed to each other or, alternatively, can be secured with conventional mechanical fastening elements. According to the preferred embodiment of the invention, the two halves of the retaining ring can be mutually connected by means of a hose clamp, for example made of plastic.

The cover is made of a flexible and waterproof material, such as neoprene or another material having the same properties of water-tightness. The inner surface of the cover can be coated with an insulating material, for example a plush material, which contributes toward maximizing the protection of the driver's hands against low temperatures. To prevent the side opening of the cover from being deformed, allowing this cover to be removed from the handlebar, the edge of the opening is delimited by a reinforcing ring made of rigid material, such as plastic or metal. The reinforcing ring can be stitched or glued to the material of the cover, and has a smaller diameter than the maximum overall dimensions of the retaining element fastened to the handlebar or to the handgrip.

Preferably, the protective element according to the present invention also comprises an element for engaging with the free end of the handlebar or of the handgrip. If the vehicle is provided with compensators (i.e. bar end weights) screwed to the ends of the handlebar, the engaging element is connected to the relative compensator. In general, the engaging element has a concave portion that can be fitted, without clearance, over the free end of the handlebar, of the handgrip or of the compensator, with the function of providing a stable fastening point for the cover. The engaging element can be made of rubber or plastic, so as to adapt to the shape of the end over which it is fitted.

A stiffening element, made of a substantially non-deformable material, can be fastened to the engaging element to at least partly support the protective cover. For example, the stiffening element is a rod or a sheet made of plastic material that extends along the inner or outer surface of the cover to support it and maintain its original shape in all conditions of use.

The protective element according to the present invention is simple to produce and inexpensive, as the cover (sheath), the retaining element, the engaging element and the stiffening element can be produced at minimum costs with materials easily available on the market.

Installation on the vehicle is fast and simple. It is sufficient to fit the sheath over the handlebar, inserting at least a portion of this handlebar through the side opening, until the retaining ring is against the fairing or covering of the handlebar. At this point, the retaining ring is constrained to the frame of the handlebar, or to the relative handgrip, in a position inside the sheath. If the engaging element is also present, this can be manually fitted over the end of the handlebar. In this configuration, the protective element is ready for use. The sheath surrounds the relative handgrip and the control lever, for example of the brake or of the clutch, and the driver of the vehicle can easily insert his or her hand in the inner volume of the sheath, through the rear opening.

The protective element is supported stably by the retaining ring at the side opening of the cover, by the control lever of the vehicle at the front portion, and by the engaging element, if provided, associated with the stiffening element, at the side portion opposite said side opening. The constraints are sufficient to prevent the cover or sheath from vibrating or from moving due to air displacement during travel of the vehicle.

Preferably, the cover is provided with a second side opening, distinct from the first opening and having, in general, smaller dimensions than said first opening. The second side opening allows insertion of the control lever of the vehicle into the cover. The second side opening can have dimensions suitable to fit with minimum clearance over the control lever, for example the brake lever, so as to at least partly hold the cover in place.

A further advantage of the protective element with respect to prior art solutions is given by the fact that the cover does not rest on the handgrip of the accelerator and does not obstruct the movements of the control lever.

Further aspects and advantages of the present invention will be more apparent from the description below, provided by way of non-limiting example with reference to the accompanying schematic drawings, in which:
- Figure 1 is a top view of a protective element according to the present invention, installed on an scooter;
- Figure 2 is a side view of the protective element shown in Figure 1;
- Figure 3 is a perspective front view of the protective element shown in Figure 1;
- Figure 4 is a perspective view of a detail of the protective element shown in Figure 1;
- Figure 5 is a side view of the protective element shown in Figure 1;
- Figure 6 is a partial sectional view of a component of the protective element shown in Figure 1;
- Figure 7 is a perspective view of the component of the protective element shown in Figure 6.

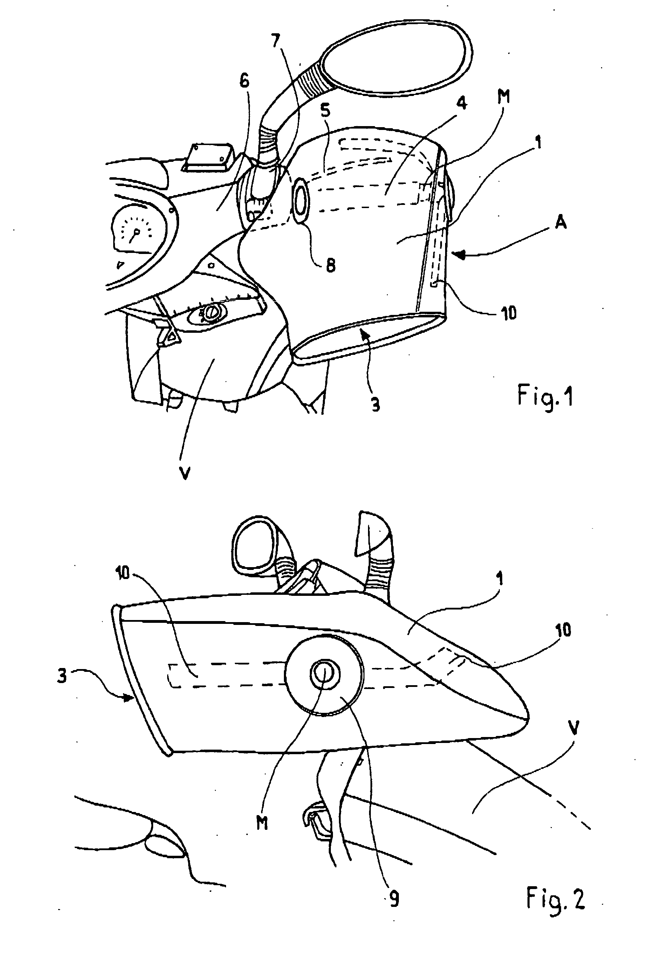

With reference to Figures 1 to 3, the protective element **A**, according to a preferred embodiment of the present invention, comprises a cover **1** having a first side opening **2**, aligned with the handlebar **M** of the vehicle **V**, and a mouth **3**, having an axis substantially transverse to the axis of the opening **2**. An end of the handlebar **M**, for example of a motorcycle or scooter, is inserted into the opening **2**, while the mouth 3 allows insertion of the hand and/or insertion of part of the forearm of the driver of the vehicle **V**.

The dimensions of the cover **1**, of the side opening **2** and of the mouth **3**, are such as to allow the hand of a user to easily reach and operate the controls of the vehicle, such as the handgrip **4** to control the power supply to the engine or the brake lever **5**, located on the end of the handlebar **M** of the vehicle **V** that is housed inside said cover **1**.

The cover **1** can be produced with different waterproof materials, such as rubber or plastic. Preferably, the cover **1** is a neoprene sheath, suitably shaped to contain the handgrip **4** and the lever **5**. The sheath **1** can be made with a single piece of neoprene, or can be assembled by stitching together two or more portions of neoprene. This material is particularly suitable to produce the sheath **1**, as it is waterproof, thermally insulating and flexible, while at the same time sufficiently rigid to maintain its original shape. Figures 1-3 show how the cover **1** maintains the original "glove" shape. In particular,

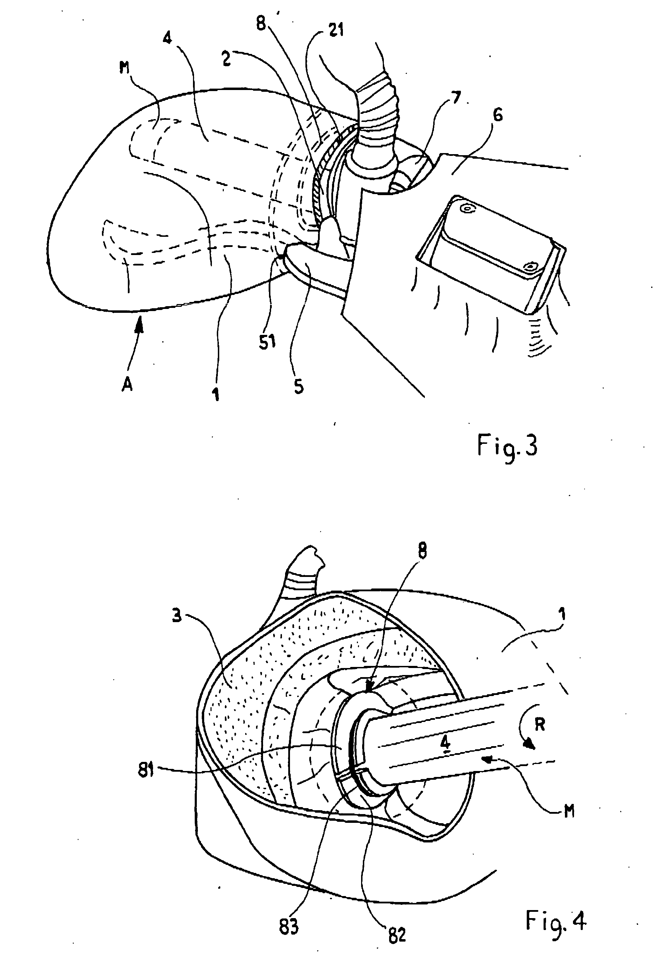

Figure **3** shows the control lever of the brake **5** (broken line) of the vehicle **V** housed in the inner volume of the cover **1**. The lever **5** passes through a second side opening **51**, in practice a hole, (Figure **3**) produced on the side of the wall of the cover **1**. The hole **51** is distinct and separate from the side opening **2**. For example, the hole **51** can be obtained by cutting through the wall of the cover **1**. The dimensions of the hole **51** are generally smaller than those of the side opening **2**. Preferably, the edges of the hole **51** are fitted over the lever **5**, contributing toward stabilizing the cover **1** without interfering with the movement of this lever **5**. For example, the edges of the hole **51** slide on the lever **5** when it is operated by the driver. Alternatively, the edges of the hole **51** adhere to the lever **5** and are deformed to follow its movements.

The side opening **2** has dimensions that allow insertion of the handlebar **M** of a conventional vehicle **V** inside the sheath **1**. The dimensions of the opening **2** can also allow insertion of part of the fairing **6** or of the switch assembly **7** into the sheath **1**. The side opening **2** can have any shape, for example it can be hexagonal, although preferably it is circular.

To prevent deformation of the edges of the opening **2**, the protective element **A** is provided with a reinforcing ring **21** (Figure **3**) stitched or glued along these edges. The reinforcing ring **21** can be made of metal or plastic, such as polyethylene or PVC.

At least one retaining element **8** can be positioned inside the neoprene sheath **1**, with the function of preventing removal of the handlebar **M** from the sheath **1** through the relative side opening **2** once the protective element **A** has been installed on the vehicle **V**. Figure **4** shows the preferred embodiment of the retaining element **8**, which has a generic toroidal shape and can be stably constrained to the metal frame of the handlebar **M** or to the handgrip **4**. The retaining element **8** is secured to the vehicle **V** after the handlebar **M** has been inserted into the sheath **1**.

Advantageously, the retaining element **8** has overall dimensions (in a radial direction) that prevent it from passing through the side opening **2** or the reinforcing ring **21**. In other words, the maximum diameter of the retaining element **8** is larger than the diameter of the side opening **2** of the sheath **1** or of the reinforcing ring **21**. In this way, once the retaining element 8, in practice a ring, has been secured to the handlebar **M** or to the handgrip **4**, the sheath **1** can no longer be accidentally detached from the vehicle **V** and cannot be stolen when the vehicle V is parked. A further advantage offered by the presence of the retaining ring **8** consists in the fact that the sheath **1** is maintained in its correct operating position during travel of the vehicle **V**. In fact, the force of the air striking against the sheath **1** when the vehicle **V** is travelling, tends to remove this sheath **1** from the handlebar **M**, with serious risk of obstructing the hands of the driver of the vehicle **V** or the movements of the control lever **5**. The retaining ring **8** prevents unwanted movements of the sheath **1**, guaranteeing safe driving.

Preferably, as shown in Figure **4**, the retaining ring **8** is formed of two portions **81** and **82**, for example two halves, which can be mutually connected to be clamped against the handlebar **M** or the handgrip **4**. Connection of the portions **81** and **82** can be attained by means of screws or clips, although preferably a hose clamp **83** is used, such as a plastic clip of the type used to group together electrical cables. Installation of the retaining ring **8** is therefore simple: it is sufficient to position the two portions **81** and **82** as shown in Figure **4**, mutually opposed, and tighten the hose clamp **83**.

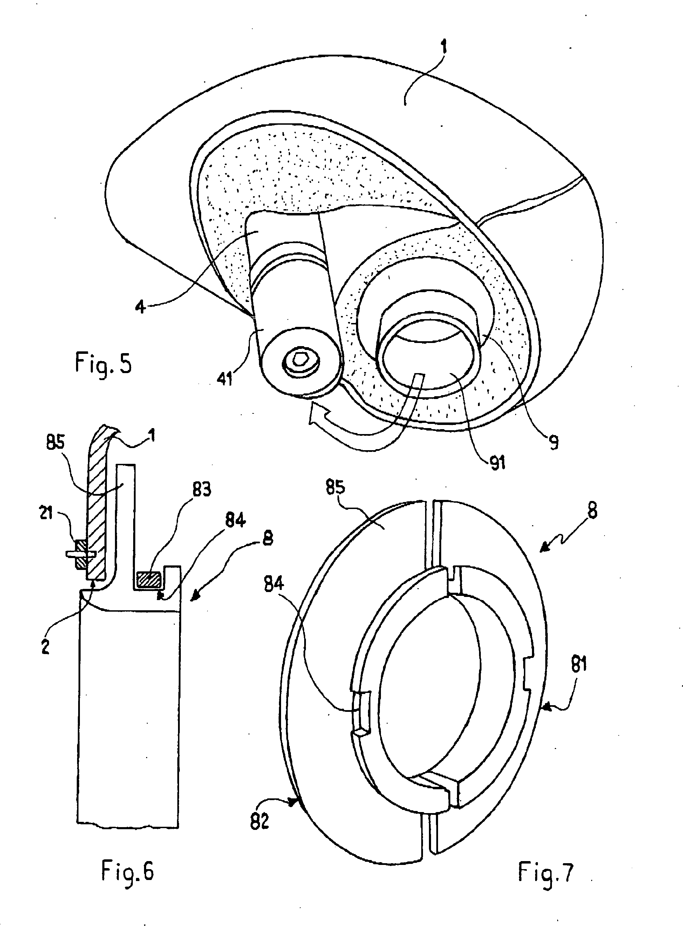

Figures **6** and **7** show in detail the retaining ring **8**. The two portions **81** and **82** are each provided with a seat **84** to house the hose clamp **83** (Figure **6**) and with a portion **85** that extends radially. The portion **85** is intended to abut against the inner surface of the sheath **1**, at the side opening **2** or at the reinforcing ring **21**. The diameter of the reinforcing ring **21** is smaller than the maximum diameter of the portion **85**.

Preferably, the portion **85** of the retaining ring **8** is circular and has a smooth edge suitable to slide on the inner surface of the sheath **1**. In this way the retaining ring **8** can be secured to the handgrip **4** that controls the engine of the vehicle **V** (accelerator) without obstructing its rotation inside the sheath **1**. As shown in Figure **4**, the handgrip **4** can be rotated in the direction of the arrow R and in the opposite direction, during return travel, without the ring **8** interfering with this rotation.

According to the preferred embodiment of the present invention, the protective element **A** comprises an element **9** for engaging with the free end of the handlebar **M**, or of the handgrip **4**, or of the compensator **41** if present on the vehicle **V**. As shown in Figure **5** (arrow), the engaging element **9** comprises a concave portion **91** suitable to fit without clearance over the end or over the compensator **41**. The engaging element **9** is secured to the sheath **1**, for example by means of glue or by stitching. When it is constrained to the end **41,** the engaging element **9** offers a further fastening point of the sheath **1** to the handlebar **M**. In this way, stability of the sheath **1** against the action of air during travel of the vehicle **V** is maximized. Figures **1** and **2** show the protective element A correctly installed on the handlebar **M**, with the element **9** fitted over the compensator **43.**

In place of the engaging element **9**, the element **A** can comprise a second retaining element **8**, which can be secured to the handgrip **4** at the second free end of the handlebar **M**.

Preferably, the protective element **A** is provided with a stiffening element **10** which can be constrained to the engaging element **9**. The stiffening element **10** is indicated with a broken line in Figures 1 and 2. In general, this element **10** can have an elongated shape, so as to extend along the inner or outer surface of the sheath **1**, and is made of a substantially non-deformable, or partially elastic, material. In Figures **1** and **2**, the stiffening element **10** is a rod, a plate, a sheet, a band or a strip made of plastic material, such as PVC, which extends laterally for the entire length of the sheath **1** and, in part, also frontally to prevent the sheath **1** from resting on the lever **5** during travel of the vehicle **V**. The element **10** can be stitched or glued to the inner or outer surface of the neoprene sheath 1. What is important is that the element **10** supports the sheath **1** and prevents it from being deformed due to the weight or due to the action of the air.

Installation of the protective element **A** on the vehicle **V** is simple and rapid. The user arranges the sheath or cover **1** as shown in Figures **1-4****,** inserting the handlebar **M** into the sheath **1** through the relative side opening **2**. The user then secures the retaining ring **8**, which also acts as anti-theft device for the sheath **1**, and constrains the engaging element **8** to the end **41** of the handlebar **M**.

The protective element **A** is stably supported in all conditions of use of the vehicle V. The sheath **1** is supported at the side opening **2** by the retaining ring **8**, in particular by its portion **85**, and is supported at the front portion by the engaging element **9** and by the stiffening element **10**. In this way, the sheath **1** is prevented from moving dangerously during travel of the vehicle V. The materials used to produce the protective element **A** and its components are easily available on the market at minimum costs, with evident advantages with regard to the overall cost.

## Claims

1. A protective element (A) of the upper limbs of users of vehicles (V) provided with a handlebar (M), of the type comprising a cover (1) provided with at least a first side opening (2) for insertion of an end of said handlebar and with a rear opening (3) to allow at least partial housing of an upper limb of the user inside the cover (1), **characterized in that** it comprises at least a retaining element (8), distinct from said cover (1) and positioned inside said cover (1), which can be fastened integrally to the handlebar (M) or to the relative handgrip (4) to prevent the handlebar (M) from slipping through said first side opening (2) and to support at least a part of the cover (1 ).

2. The protective element (A) as claimed in claim 1, wherein said retaining element (8) has a substantially toroidal shape and its outer diameter is larger than the diameter of said side opening (2).

3. The protective element (A) as claimed in claim 2, wherein said retaining element (8) is composed of two halves (81, 82) which can be clamped to the frame of the handlebar (M) or to the handgrip (4), on the opposite side with respect thereto.

4. The protective element (A) as claimed in any one of claims 1-3, wherein said retaining element (8) is made of a plastic material or of metal.

5. The protective element (A) as claimed in one of claims 3 and 4, wherein said halves (81, 82) can be mutually connected by means of a hose clamp (83).

6. The protective element (A) as claimed in any one of claims 1-5, wherein said cover (1) is made of a flexible and waterproof material and said side opening (2) is delimited by a rigid reinforcing ring (21), which prevents deformation of the opening (2).

7. The protective element (A) as claimed in any one of claims 1-6, **characterized in that** it also comprises an element (9) for engaging with the free end (41) of the handlebar (M) or of the handgrip (4).

8. The protective element (A) as claimed in any one of claims 1-7, wherein said engaging element (9) is secured to said cover (1) and has a concave portion (91) which can be fitted over said free end (41).

9. The protective element (A) as claimed in any one of claims 1-8, wherein said engaging element (9) is made of rubber or plastic.

10. The protective element (A) as claimed in any one of claims 7-9, **characterized in that** it also comprises a stiffening element (10), which can be fastened to said engaging element (9), made of a substantially non-deformable material, which extends along the inner or outer surface of said cover (1) to support it.

11. The protective element (A) as claimed in claim 10, wherein said stiffening element (10) is a rod or a sheet made of plastic material.

12. The protective element (A) as claimed in any one of claims 1 to 11, wherein said cover (1) is provided with a second side opening (51), distinct and separate from said first side opening (2), for insertion of an end of a control lever (5) of the vehicle (V).

## Patentansprüche

1. Schutzelement (A) für die oberen Gliedmaßen von Benutzern von Fahrzeugen (V), die mit einem Lenker (M) versehen sind, wobei das Schutzelement von der Art ist, die eine Abdeckung (1) umfasst, die mit wenigstens einer ersten seitlichen Öffnung (2) zum Einstecken eines Endes des Lenkers und einer hinteren Öffnung (3) versehen ist, so dass eine obere Extremität des Benutzers zumindest teilweise in der Abdeckung (1) untergebracht werden kann, **dadurch gekennzeichnet, dass** es wenigstens ein Halteelement (8) umfasst, das sich von der Abdeckung (1) unterscheidet und im Innern der Abdeckung (1) angeordnet ist und das als Ganzes am Lenker (M) oder am jeweiligen Handgriff (4) befestigt werden kann, um Durchrutschen des Lenkers (M) durch die erste seitliche Öffnung (2) zu verhindern und wenigstens einen Teil der Abdeckung (1) zu tragen.

2. Schutzelement (A) nach Anspruch 1, wobei das Halteelement (8) im Wesentlichen torusförmig ist und sein Außendurchmesser größer ist als der Durchmesser der seitlichen Öffnung (2).

3. Schutzelement (A) nach Anspruch 2, wobei das Halteelement (8) aus zwei Hälften (81, 82) zusammengesetzt ist, die am Rahmen des Lenkers (M) oder am Handgriff (4) an jeweils gegenüberliegenden Seiten festgeklemmt werden können.

4. Schutzelement (A) nach einem der Ansprüche 1-3, wobei das Halteelement (8) aus Kunststoff oder Metall ist.

5. Schutzelement (A) nach einem der Ansprüche 3 und 4, wobei die Hälften (81, 82) mit Hilfe einer Schlauchschelle (83) miteinander verbunden werden können.

6. Schutzelement (A) nach einem der Ansprüche 1-5, wobei die Abdeckung (1) aus einem flexiblen und wasserdichten Material ist und die seitliche Öffnung (2) durch eine starren Verstärkungsring (21) begrenzt ist, der eine Verformung der Öffnung (2) verhindert.

7. Schutzelement (A) nach einem der Ansprüche 1-6, **dadurch gekennzeichnet, dass** es zudem ein Element (9) zur Verbindung mit dem freien Ende (41) des Lenkers (M) oder des Handgriffs (4) umfasst.

8. Schutzelement (A) nach einem der Ansprüche 1-7, wobei das verbindende Element (9) an der Abdeckung (1) befestigt ist und einen konkaven Teil (91) aufweist, der über das freie Ende (41) gestülpt werden kann.

9. Schutzelement (A) nach einem der Ansprüche 1-8, wobei das verbindende Element (9) aus Gummi oder Kunststoff ist.

10. Schutzelement (A) nach einem der Ansprüche 7-9, **dadurch gekennzeichnet, dass** es zudem ein Versteifungselement (10) umfasst, das an dem verbindenden Element (9) befestigt werden kann, aus einem im Wesentlichen nicht verformbaren Material besteht und entlang der Innen- oder Außenfläche der Abdeckung (1) verläuft, um diese zu stabilisieren.

11. Schutzelement (A) nach Anspruch 10, wobei das Versteifungselement (10) ein Stab oder eine Lage aus Kunststoff ist.

12. Schutzelement (A) nach einem der Ansprüche 1 bis 11, wobei die Abdeckung (1) mit einer zweiten seitlichen Öffnung (51) zum Einstecken eines Endes eines Bedienungshebels (5) des Fahrzeugs (V) versehen ist, die sich von der ersten seitlichen Öffnung (2) unterscheidet und davon getrennt ist.

## Revendications

1. Elément de protection (A) des membres supérieurs des utilisateurs de véhicules (V) dotés d'un guidon (M), du type comprenant un couvercle (1) prévu avec au moins une première ouverture latérale (2) pour l'insertion d'une extrémité dudit guidon et avec une ouverture arrière (3) pour permettre le logement au moins partiel d'un membre supérieur de l'utilisateur à l'intérieur du couvercle (1), **caractérisé en ce qu'**il comprend au moins un élément de retenue (8), distinct du couvercle (1), et positionné à l'intérieur du couvercle (1), qui peut être fixé de manière solidaire au guidon (M) ou à la poignée (4) relative pour empêcher le guidon (M) de glisser à travers ladite première ouverture latérale (2) et pour supporter au moins une partie du couvercle (1).

2. Elément de protection (A) selon la revendication 1, dans lequel ledit élément de retenue (8) a une forme sensiblement toroïdale et son diamètre externe est supérieur au diamètre de ladite ouverture latérale (2).

3. Elément de protection (A) selon la revendication 2, dans lequel ledit élément de retenue (8) est composé de deux moitiés (81, 82) qui peuvent être bloquées sur le châssis du guidon (M) ou sur la poignée (4), sur le côté opposé par rapport à ce dernier.

4. Elément de protection (A) selon l'une quelconque des revendications 1 à 3, dans lequel ledit élément de retenue (8) est réalisé avec une matière plastique ou à partir de métal.

5. Elément de protection (A) selon l'une quelconque des revendications 3 et 4, dans lequel lesdites moitiés (81, 82) peuvent être mutuellement raccordées au moyen d'un collier de serrage (83).

6. Elément de protection (A) selon l'une quelconque des revendications 1 à 5, dans lequel ledit couvercle (1) est réalisé avec un matériau souple et étanche à l'eau et ladite ouverture latérale (2) est délimitée par une bague de renforcement rigide (21), qui empêche la déformation de l'ouverture (2).

7. Elément de protection (A) selon l'une quelconque des revendications 1 à 6, **caractérisé en ce qu'**il comprend également un élément (9) pour se mettre en prise avec l'extrémité libre (41) du guidon (M) ou de la poignée (4).

8. Elément de protection (A) selon l'une quelconque des revendications 1 à 7, dans lequel ledit élément de mise en prise (9) est fixé sur ledit couvercle (1) et a une partie concave (91) qui peut être montée sur ladite extrémité libre (41).

9. Elément de protection (A) selon l'une quelconque des revendications 1 à 8, dans lequel ledit élément de mise en prise (9) est réalisé à partir de caoutchouc ou de plastique.

10. Elément de protection (A) selon l'une quelconque des revendications 7 à 9, **caractérisé en ce qu'**il comprend également un élément de renforcement (10), qui peut être fixé audit élément de mise en prise (9), réalisé avec un matériau sensiblement non déformable, qui s'étend le long de la surface interne ou externe dudit couvercle (1) pour le supporter.

11. Elément de protection (A) selon la revendication 10, dans lequel ledit élément de renforcement (10) est une tige ou une feuille réalisée à partir d'une matière plastique.

12. Elément de protection (A) selon l'une quelconque des revendications 1 à 11, dans lequel ledit couvercle (1) est prévu avec une deuxième ouverture latérale (51), distincte et séparée de ladite première ouverture latérale (2), pour l'insertion d'une extrémité d'un levier de commande (5) du véhicule (V).
